# EUROPÄISCHE PATENTSCHRIFT

(11) **EP 3 248 858 B1**
(45) Veröffentlichungstag und Bekanntmachung des Hinweises auf die Patenterteilung: **21.10.2020**
(21) Anmeldenummer: 17171233.4
(22) Anmeldetag: 16.05.2017
(51) Int. Cl.: B62D 33/06, B60R 21/00

(54) **TECHNIK ZUR STEUERUNG VON STANDFUNKTIONEN EINES NUTZFAHRZEUGS**
TECHNIQUE FOR CONTROLLING STAND FUNCTIONS OF A COMMERCIAL VEHICLE
TECHNIQUE DE COMMANDE DE FONCTIONS D'ÉTAT D'UN VÉHICULE UTILITAIRE

(30) Priorität: 19.05.2016 DE 102016006198
(43) Veröffentlichungstag der Anmeldung: 29.11.2017
(73) Patentinhaber: MAN Truck & Bus SE, 80995 München (DE)
(72) Erfinder: Mohra, Holger, 80805 München (DE); Güllich, Johannes, 85229 Markt Indersdorf (DE); Michel, Britta, 81675 München (DE); Zimmermann, Andreas, 80995 München (DE)
(74) Vertreter: v. Bezold & Partner Patentanwälte - PartG mbB

(56) Entgegenhaltungen:
- CN-U- 202 100 150
- DE-A1- 3 039 448
- DE-A1-102013 004 612
- DE-A1-102014 217 691

## Beschreibung

Die vorliegende Erfindung betrifft allgemein eine Technik zur Steuerung von Standfunktionen eines Nutzfahrzeugs. Ohne darauf beschränkt zu sein, ist insbesondere ein Fahrerhaus für ein Nutzfahrzeug mit steuerbaren Standfunktionen beschrieben.

Im Baustellenbetrieb, bei Verteilerfahrten und auch bei Langstreckenfahrten muss ein LKW-Fahrer im Stand des LKWs häufig Standfunktionen des Fahrzeugs bedienen. Diese Standfunktionen können beispielsweise den Warnblinker oder Fahrzeugaufbauten betreffen. Bei herkömmlichen Nutzfahrzeugen ohne Sonderausstattung können die Standfunktionen nur im Fahrerhaus bedient werden, so dass der Fahrer - gegebenenfalls mehrfach - in das erhöhte Fahrerhaus ein- und aussteigen muss, um dort die Standfunktionen zu betätigen. Dies ist mit einer erhöhten Unfallgefahr verbunden.

Herkömmliche Nutzfahrzeuge können eine Außenfernbedienung als Sonderausstattung aufweisen. Diese kann jedoch leicht durch einen Sturz beschädigt werden. Bei einer kabelgebundenen Anbringung, beispielsweise am Fahrersitz, ist die Außenfernbedienung zudem anfällig für Verschmutzung und Defekt. Kabellose Außenfernbedienungen können verlegt werden oder mangels aufgeladener Spannungsversorgung nicht einsatzbereit sein. Zudem bieten Außenfernbedienungen oftmals keine redundante Steuerungsmöglichkeit für Straßenverkehrsfunktionen, die auch im Standbetrieb von Bedeutung sind, wie beispielsweise den Warnblinker.

Das Gebrauchsmuster CN 202100150 U beschreibt eine Sicherheitskabinentür für ein Führerhaus eines Krans. Die Sicherheitskabinentür umfasst eine geradlinig entlang einer Gleitbahn verschiebbare Kabinentür, wodurch das Öffnen und Schließen der Kabinentür realisiert wird. Jeweils an der Innenseite und der Außenseite der Fahrerkabine sind Taster angeordnet, um die Kabinentür durch die zu öffnen und zu schließen. Aufgrund der Anordnung auch auf der Außenseite sind die Taster unabhängig von der Offen- und Schließstellung der Kabinentür von außerhalb des Führerhauses zugänglich.

Das Dokument DE 30 39 448 C2 beschreibt ein Bergbaugerät mit einem dem Schutz der Bedienungsperson dienenden Schutzdach. Das Schutzdach ist um eine vertikale Achse, die vor dem Führerstand liegt, schwenkbar angeordnet. Das Bergbaugerät ist seitlich neben dem Führerstand offen ohne eine Fahrzeugtür.

Das Dokument DE 10 2013 004 612 A1 beschreibt ein Infotainmentsystem eines Kraftfahrzeugs. Das Empfangen einer Eingabe von einer außen am Kraftfahrzeug befindlichen Bedienperson erfolgt über eine Bedieneinrichtung, die von außerhalb des Kraftfahrzeugs bedienbar angeordnet ist. Eine Ausgabeeinrichtung 24 ist an oder in einem Fenster des Kraftfahrzeugs angebracht oder in einer Außenhaut des Kraftfahrzeugs integriert.

Das Dokument DE 10 2014 217 691 A1 beschreibt ein Nutzfahrzeug mit einer fahrzeugfesten Kontrolleinheit. Auf dem Fahrgestell ist in einem Arbeitsbetrieb mit Antriebsenergie aus dem Fahrmotor versorgtes Arbeitsaggregat transportierbar, insbesondere eine Betonpumpe. Das Arbeitsaggregat ist von dem Fahrgestell entfernt bedienbaren mittels einer mobilen Fernsteuereinrichtung.

Somit ist es Aufgabe der vorliegenden Erfindung, eine Technik zur Bedienung von Standfunktionen eines Nutzfahrzeuges bereitzustellen. Eine alternative oder weitere Aufgabe ist, eine robuste Technik zur unfallfreien Bedienung von Standfunktionen eines Nutzfahrzeugs bereitzustellen.

Diese Aufgabe wird gelöst durch ein Fahrerhaus gemäß dem unabhängigen Anspruch für ein Nutzfahrzeug mit steuerbare Standfunktionen.

Gemäß einem Aspekt umfasst ein Fahrerhaus für ein Nutzfahrzeug mit steuerbaren Standfunktionen eine Bedienvorrichtung mit Bedienelementen zur Steuerung der Standfunktionen des Nutzfahrzeugs. Die Bedienelemente am Fahrerhaus sind von außerhalb des Fahrerhauses zugänglich angeordnet.

Die am Fahrerhaus angeordnete Bedienvorrichtung kann ein Bedienen der Standfunktionen ermöglichen, ohne in das Fahrerhaus einzusteigen. Dadurch kann eine stationäre Arbeit mit dem Nutzfahrzeug erleichtert und eine mit häufigem Ein- und Aussteigen verbundene Unfallgefahr verringert werden. Zudem kann die Steuerung der Standfunktionen durch ein direktes Sichtfeld (beispielsweise auf einen Arbeitsbereich über oder hinter dem Fahrerhaus) besser überwacht werden als vom Inneren des Fahrerhauses.

Die Standfunktionen können ein Beladen und Entladen und/oder ein Absichern des Nutzfahrzeugs betreffen. Die Standfunktionen können Funktionen des Nutzfahrzeugs betreffen, die ausschließlich im Stand bedienbar sind, und/oder Funktionen, die zusätzlich (beispielsweise von innerhalb des Fahrerhauses) bei Fahrt bedienbar sind, wie beispielsweise eine Fahrzeugbeleuchtung.

Alternativ oder zusätzlich können die Standfunktionen den Rangierbetrieb des Nutzfahrzeugs betreffen, Beispielsweise kann das Nutzfahrzeug mittels der Bedienvorrichtung ein Stück vor- und/oder zurückgefahren werden (z. B. zum Rangieren auf engem Raum oder beim Aufsatteln im Fall einer Zugmaschine). Die dabei ausgeführte Fahrbewegung kann teilautonom gesteuert sein. Beispielsweise kann mittels der Bedienvorrichtung eine Fahrrichtung und/oder eine maximale Fahrweglänge vorgeben werden. Gesteuert durch Sensoren des Nutzfahrzeugs kann die an der Bedienvorrichtung vorgegebene Fahrbewegung vom Nutzfahrzeug umgesetzt werden.

Die steuerbaren Standfunktionen können einen Warnblinker, eine höhenverstellbare Luftfederung und/oder hydraulische Standstützen umfassen. Alternativ oder ergänzend kann das Nutzfahrzeug steuerbare Fahrzeugaufbauten umfassen. Die Standfunktionen können die Fahrzeugaufbauten betreffen. Die Bedienelemente, oder eine echte Teilmenge der Bedienelemente, können dazu ausgebildet sein, die Fahrzeugaufbauten zu steuern.

Im Vergleich zu kabelgebundenen Fernsteuerungen ist die am Fahrerhaus angeordnete Bedienvorrichtung robuster (beispielsweise durch eine Einfassung in Fahrzeugblech) und vor Stürzen geschützt. Im Gegensatz zu einer kabellosen Fernsteuerung kann die am Fahrerhaus angeordnete Bedienvorrichtung nicht verlegt werden, ist ohne Abstimmung zwischen verschiedenen Nutzern auffindbar und jederzeit einsatzbereit.

Ferner umfasst das Fahrerhaus mindestens eine Fahrzeugtür. Die Fahrzeugtür gibt in einer Offenstellung die Bedienelemente von außerhalb des Fahrerhauses zugänglich frei.

Ein Offnen der Fahrzeugtür macht die Bedienelemente zur Steuerung der Standfunktionen (beispielsweise der Fahrzeugaufbauten) von außerhalb des Fahrzeugs zugänglich. Die Fahrzeugtür kann dazu in der Offenstellung einen Spalt breit geöffnet sein. Die Bedienelemente können so angeordnet sein, dass bei der Offenstellung der Fahrzeugtür, beispielsweise einer um eine Breite der Bedienelemente geöffneten Fahrzeugtür, die Bedienelemente von außerhalb des Fahrerhauses zugänglich sind.

Die Bedienvorrichtung kann bei geöffneter Fahrzeugtür das Bedienen der Standfunktionen ermöglichen, ohne in das Fahrerhaus einzusteigen. Die Zugänglichkeit der Bedienelemente von außerhalb des Fahrerhauses kann die Offenstellung der Fahrzeugtür erfordern. Die Fahrzeugtür kann eine Zugriffsbeschränkung und/oder einen Spritz- und Witterungsschutz für die Bedienelemente bewirken.

Die mindestens eine Fahrzeugtür kann die Fahrzeugtür auf der Fahrerseite und/oder die Fahrzeugtür auf der Beifahrerseite des Fahrerhauses umfassen.

Die Bedienelemente sind in einer Schließstellung der Fahrzeugtür von außerhalb des Fahrerhauses unzugänglich überdeckt. Die Fahrzeugtür kann zum Verschließen einer im Fahrerhaus vorgesehenen Türöffnung ausgebildet sein. Ein Schließen der Fahrzeugtür kann die Bedienvorrichtung von außerhalb des Fahrzeugs unzugänglich machen. Ein Teil des Fahrerhauses, beispielsweise die Fahrzeugtür oder ein feststehender Rahmen der Türöffnung im Fahrerhaus für die Fahrzeugtür, kann in der Schließstellung der Fahrzeugtür die Bedienvorrichtung verdecken und/oder verschließen.

Die Bedienelemente, oder eine echte Teilmenge der Bedienelemente, können an der Fahrzeugtür angeordnet sein. Die Fahrzeugtür kann eine in Einbaulage dem Inneren des Fahrerhauses zugewandte Innenseite (z. B. ein Innenblech) und eine in Einbaulage vom Fahrerhaus abgewandte Außenseite (z. B. ein Außenblech) aufweisen. Die Außenseite und die Innenseite können an einem Türfalz verbunden sein.

Die Bedienelemente, oder eine echte Teilmenge der Bedienelemente, können nicht erfindungsgemäß an der Innenseite der Fahrzeugtür angeordnet sein. Die Bedienelemente können an der Innenseite der Fahrzeugtür unzugänglich vom Fahrersitz angeordnet sein, beispielsweise tiefer als eine Sitzfläche des Fahrersitzes und/oder hinter dem Fahrersitz.

Die Bedienelemente, oder eine echte Teilmenge der Bedienelemente, können an oder in einer Stirnseite der Fahrzeugtür angeordnet sein. Die Stirnseite kann eine Schmalseite der Fahrzeugtür sein. Die Stirnseite der Fahrzeugtür kann einer angelenkten oder angeschlagenen Seite der Fahrzeugtür gegenüberliegen. Die Stirnseite kann durch eine Stufe in der Innenseite oder eine Ausbauchung der Innenseite gebildet sein.

Die Bedienelemente, oder eine echte Teilmenge der Bedienelemente, können in der Schließstellung von einem Rahmen der Türöffnung im Fahrerhaus überdeckt sein.

Die Bedienelemente können innerhalb des Türfalzes der Fahrzeugtür und/oder in Einbaulage dem Inneren des Fahrerhauses zugewandt angeordnet sein. Die Bedienelemente können außerhalb der Innenseite der Fahrzeugtür und/oder in Einbaulage dem Inneren des Fahrerhauses abgewandt angeordnet sein. Die Bedienelemente können zwischen dem Türfalz der Fahrzeugtür und einer Kante oder Stufe der Innenseite der Fahrzeugtür angeordnet sein.

In der Türöffnung, beispielsweise am Rahmen, kann eine umlaufende Dichtung angeordnet sein. Die Bedienelemente können außerhalb der Dichtung der Türöffnung oder des Rahmens angeordnet sein. Alternativ oder ergänzend kann die Fahrzeugtür eine umlaufende Dichtung aufweisen. Die Bedienelemente können innerhalb der Dichtung der Fahrzeugtür angeordnet sein.

Das Fahrerhaus kann ferner Trittstufen umfassen. Die Bedienelemente, oder eine echte Teilmenge der Bedienelemente, können (unabhängig von einer Stellung der Fahrzeugtür) im Bereich der Trittstufen am Fahrerhaus angeordnet sein. Die Fahrzeugtür kann in der Schließstellung einen Bereich der Trittstufen überdecken. Die Bedienelemente können in diesem Bereich der Trittstufen eingebaut sein.

Alternativ oder ergänzend können die Bedienelemente, oder eine echte Teilmenge der Bedienelemente, an der Innenseite der Fahrzeugtür auf Höhe der Trittstufen angeordnet sein. Die Bedienelemente können an der Innenseite der Fahrzeugtür hervorstehen. Die hervorstehenden Bedienelemente können eine horizontale oder (gegenüber der Horizontalen) geneigte Bedienfläche definieren. Beispielsweise können die Bedienelemente ein horizontales oder (gegenüber der Horizontalen) geneigtes Tastenfeld umfassen. Die hervorstehenden Bedienelemente können in der Offenstellung der Fahrzeugtür eine Bedienung im Stand (beispielsweise auf Hüfthöhe) ermöglichen. Die hervorstehenden Bedienelemente können in der Schließstellung der Fahrzeugtür zwischen zwei Trittstufen angeordnet sein.

Alternativ oder ergänzend können die Bedienelemente, oder eine echte Teilmenge der Bedienelemente, innerhalb des Fahrerhauses so angeordnet sein, dass die Bedienelemente bei der Offenstellung der Fahrertür von außerhalb des Fahrerhauses in Reichweite sind. In der Offenstellung können die Bedienelemente neben der Fahrzeugtür stehend in Griffreichweite sein. Beispielsweise können die Bedienelemente durch die Türöffnung in Handreichweite sein. Die Bedienelemente können im Fahrerhaus unzugänglich vom Fahrersitz angeordnet sein, beispielsweise tiefer als eine Sitzfläche des Fahrersitzes und/oder hinter dem Fahrersitz.

Alternativ oder ergänzend können die Bedienelemente, oder eine echte Teilmenge der Bedienelemente, am feststehenden Rahmen der Türöffnung im Fahrerhaus für die Fahrzeugtür angeordnet sind. Die Bedienelemente können an einer Seitenfläche oder Stirnfläche der Türöffnung angeordnet sein. In der Schließstellung kann die Fahrzeugtür die Bedienelemente überdecken. In der Offenstellung kann die Fahrzeugtür die Bedienelemente freigeben.

Die Bedienelemente können im Bereich der Fahrzeugtür angeordnet sein. Die Bedienelemente, oder eine echte Teilmenge der Bedienelemente, können an einer Außenseite des Fahrerhauses, beispielsweise an einer Außenseite der Fahrzeugtür, angeordnet sein. Alternativ oder ergänzend können die Bedienelemente, oder ein Teil derer, außerhalb der Fahrzeugtür, beispielsweise an einem Holm der Türöffnung oder einer B-Säule des Fahrerhauses, angeordnet sein.

Ausführungsbeispiele des Fahrerhauses können die hierin genannten Einbaupositionen der Bedienelemente in jeder Kombination oder Unterkombination realisieren.

Zur Steuerung der Standfunktionen kann die Bedienvorrichtung mit den Standfunktionen jeweils (z. B. fest oder direkt) verdrahtet sein. Alternativ oder ergänzend kann die Bedienvorrichtung zur Steuerung der Standfunktionen mit einem Steuerbus des Nutzfahrzeugs verbunden sein.

Jedes der Bedienelemente kann einer oder mehreren der Standfunktionen zugeordnet sein. Die Zuordnung kann durch die Verdrahtung und/oder eine Konfiguration des Steuerbusses bestimmt sein. Die Zuordnung kann bei der Herstellung des Nutzfahrzeugs und/oder der Montage der Fahrzeugaufbauten bestimmbar sein.

Der Steuerbus kann dazu ausgebildet sein, die Standfunktionen gemäß der Zuordnung anzusteuern. Die Zuordnung kann an einer Benutzerschnittstelle innerhalb des Fahrerhauses abänderbar sein. Die Benutzerschnittstelle kann den Steuerbus und/oder eine Steuereinheit des Steuerbusses konfigurieren. Zum Beispiel kann mittels der Benutzerschnittstelle eine zuzuordnende Standfunktion aus einem vorgegebener Satz von Standfunktionen vom Nutzer ausgewählt werden. Alternativ oder ergänzend kann die Belegung der Bedienelemente untereinander getauscht werden.

Die Bedienvorrichtung kann Steuersignale zur Steuerung der Standfunktionen über den Steuerbus (beispielsweise einen seriellen Datenbus) senden. Der Steuerbus kann die Bedienvorrichtung und die Standfunktionen (beispielsweise Aktoren der Fahrzeugaufbauten) zur Kommunikation der Steuersignale verbinden. Der Steuerbus kann zur Kommunikation mit mehrere Masterknoten ausgebildet sein. Der Steuerbus kann ein Feldbus oder ein Bus für ein "Controller Area Network" (CAN-Bus) sein. Der Steuerbus kann zur Kommunikation zwischen integrierten Schaltkreisen oder einer "Inter-Integrated Circuit" (I2C) Kommunikation ausgebildet sein.

Eine Steuerung mittels der Bedienvorrichtung kann (z. B. für einzelne oder alle Standfunktionen) redundant sein, beispielsweise bezüglich einer Steuerung mittels einer weiteren Bedienvorrichtung. Die weitere Bedienvorrichtung kann nur innerhalb des Fahrerhauses zugänglich sein. Die gleiche Steuerungsmöglichkeit wie mittels der von außen zugänglichen Bedienvorrichtung oder eine über die Steuerungsmöglichkeit der von außen zugänglichen Bedienvorrichtung hinausgehenden Steuerungsmöglichkeit kann innerhalb des Fahrerhauses, z. B. von einem Fahrersitz aus, zugänglich sein.

Die Bedienvorrichtung kann ein Bedienfeld mit den Bedienelementen in einer rechtwinkligen Gitter- oder Matrixanordnung umfassen. Beispielsweise können vier Bedienelemente in einer 2-auf-2-Matrix angeordnet sein.

Die Bedienelemente können eine geschlossene und/oder wasserundurchlässige Schicht umfassen. Die Schicht kann eine Glasplatte (z. B. mit Elektroden für kontakt- oder berührungsempfindliche Bedienelemente) oder eine transparente Folie (z. B. für ein mechanisches Tastenfeld als die Bedienelemente) umfassen.

Die Bedienelemente können in der Offenstellung der Fahrzeugtür für eine außen am Nutzfahrzeug stehende Person zugänglich sein. Beispielsweise können die Bedienelemente auf einer Höhe unterhalb eines Fensters des Fahrzeughauses (z. B. eines Fensters der Fahrzeugtür) und/oder in der unteren Hälfte der Fahrzeugtür angeordnet sein. Die Bedienelemente können gegenüber dem Boden in einer Höhe von z. B. mindestens 400 mm, 600 mm, 650 mm oder 800 mm angeordnet sein. Ferner können die Bedienelemente gegenüber dem Boden in einer Höhe bis z. B. 1100 mm, 1700 mm oder 1800 mm angeordnet sein.

Die Steuerung durch die Bedienvorrichtung kann in der Schließstellung der Fahrzeugtür und/oder bei Fahrt des Nutzfahrzeugs unterbleiben oder ausgeschaltet sein, beispielsweise ab einer vorbestimmten Fahrtgeschwindigkeit. Die Bedienelemente können in der Schließstellung der Fahrzeugtür und/oder bei Fahrt des Nutzfahrzeugs funktionslos sein. Eine Betätigung der Bedienelemente in der Schließstellung der Fahrzeugtür (beispielsweise von innerhalb des Fahrerhauses) und/oder bei Fahrt des Nutzfahrzeugs kann ein akustisches Fehlersignal bewirken. Durch die Funktionslosigkeit und/oder das akustische Signal können Fehlbedienungen (beispielsweise unbeabsichtigte Betätigungen etwa durch den Fuß des Fahrers an der Innenseite der Fahrertür) während der Fahrt vermieden werden.

Die Bedienelemente können, beispielsweise in Abhängigkeit einer Fahrzeuglichtschaltung, beleuchtbar sein. Die Beleuchtung der Bedienelemente kann in der Schließstellung der Fahrzeugtür und/oder bei Fahrt des Nutzfahrzeugs unterbleiben. Eine Beleuchtung, beispielsweise eine Nachtbeleuchtung, der Bedienelemente kann bei geöffneter Fahrzeugtür eingeschaltet sein. Bei geschlossener Fahrzeugtür und/oder Fahrt des Nutzfahrzeugs kann die Beleuchtung der Bedienelemente ausgeschaltet sein.

Die Bedienelemente können Schalter für diskrete Steuergrößen oder Schaltzustände der Standfunktionen umfassen. Die Schalter können bistabile Kippschalter oder Wahlschalter umfassen. Alternativ oder ergänzend können die Schalter Taster umfassen.

Alternativ oder ergänzend können die Bedienelemente, oder ein Teil derer, dazu ausgebildet sein, kontinuierliche Steuergrößen oder Steuerzustände der Standfunktionen zu bestimmen. Die Bedienelemente können Linearsteller oder Drehsteller umfassen.

Die Bedienelemente können ohne bei Betätigung bewegliche Teile ausgebildet sein. Die Steuergrößen können durch manuelle Gesten (beispielsweise auf einer Bedienfläche der Bedienelemente oder in einem von den Bedienelementen berandeten Raumgebiet) bestimmt werden. Die Steuergrößen können kapazitiv (beispielsweise auf der Bedienfläche) oder berührungslos (beispielsweise durch ein Radarsignal) erfasst werden. Die Bedienvorrichtung kann einen berührungsempfindlichen Bildschirm umfassen. Eine Ausgabe des Bildschirms kann der Zuordnung der Standfunktionen entsprechen.

Zumindest einzelne der Bedienelemente können durch einen berührungsempfindlichen Bildschirm und/oder Drehsteller implementiert sein. Dadurch kann ein Funktionsumfang der steuerbaren Funktionen größer sein als eine Anzahl der Bedienelemente. Alternativ oder ergänzend kann die Zuordnung der Standfunktionen an eine Fahrzeugausstattung oder einzelne Fahrten angepasst werden.

Gemäß einem weiteren Aspekt ist ein Nutzfahrzeug bereitgestellt, das ein Fahrerhaus gemäß dem vorstehenden Aspekt umfasst und für Standfunktionen in einem Standbetrieb eingerichtet ist.

Weitere Merkmale und Vorteile der Erfindung werden im Folgenden unter Bezugnahme auf die beigefügten Zeichnungen beschrieben. Es zeigen:
- Figur 1: eine schematische Seitenansicht eines Nutzfahrzeugs und Positionsbereiche für eine Bedienvorrichtung mit Bedienelementen am Fahrerhaus des Nutzfahrzeugs;
- Figur 2: ein erstes Ausführungsbeispiel einer Bedienvorrichtung an einer Fahrzeugtür;
- Figur 3: ein zweites nicht-erfindungsgemäßes Ausführungsbeispiel einer Bedienvorrichtung an einer Fahrzeugtür;
- Figur 4: ein Beispiel für einen Höhenbereich zur Anordnung der Bedienvorrichtung;
- Figur 5: eine erste Implementierung einer Zuordnung zwischen Bedienelementen und Standfunktionen; und
- Figur 6: eine zweite Implementierung einer Zuordnung zwischen Bedienelementen und Standfunktionen.

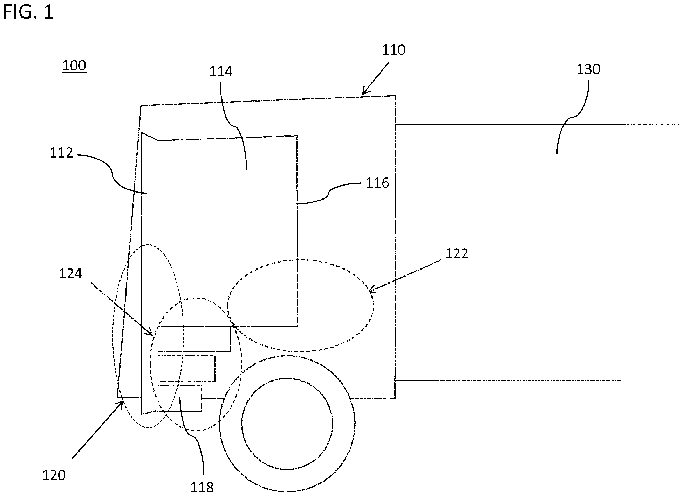

Figur 1 zeigt schematisch eine seitliche Teilansicht eines Ausführungsbeispiels eines Nutzfahrzeugs 100 mit einem Fahrerhaus 110. Das Fahrerhaus 110 umfasst eine Fahrzeugtür 112, die linksseitig angeschlagen ist am Fahrerhaus 110. In einer Schließstellung verschließt die Fahrzeugtür 112 eine Türöffnung 114 im Fahrerhaus 110. Ein feststehender Randbereich der Türöffnung 114 im Fahrerhaus 110, beispielsweise eine umlaufende Vertiefung mit Dichtlippe und/oder eine Stirnfläche der Türöffnung, ist schematisch als Rahmen 116 gezeigt. Das Fahrerhaus 110 umfasst ferner Trittstufen 118 zum Ein- und Aussteigen in das Fahrerhaus 110 durch die Türöffnung 114.

Eine Bedienvorrichtung mit Bedienelementen zur Steuerung von Standfunktionen des Nutzfahrzeugs ist am Fahrerhaus 110 angeordnet. Die Bedienelemente sind zumindest bei einer Offenstellung der Fahrzeugtür 112 von außerhalb des Fahrerhauses zugänglich.

Ein erster Bereich 120 in der unteren Hälfte der Fahrzeugtür 112 kann zur Implementierung der Bedienelemente genutzt werden.

Alternativ oder ergänzend kann die Bedienvorrichtung feststehend am Fahrerhaus, beispielsweise nicht an der zum Fahrerhaus 110 gehörenden Fahrzeugtür 112, angeordnet sein.

Beispielsweise können die Bedienelemente (alternativ oder ergänzend zum ersten Bereich 120) in einem zweiten Bereich 122 auf Höhe der Türöffnung 114 am Fahrerhaus 110 angeordnet sein. In einer ersten Variante ist die Bedienvorrichtung außerhalb des Fahrerhauses 110, beispielsweise an einer B-Säule zwischen der Türöffnung 114 und einer Fensteröffnung angeordnet (beispielsweise am Fahrerhaus in Fahrtrichtung hinter der Türöffnung 114).

In einer zweiten Variante ist die Bedienvorrichtung im Rahmen 116 der Türöffnung 114 angeordnet, beispielsweise in einer umlaufenden Seitenfläche oder einer Stirnfläche des Türrahmens 116. Die Bedienvorrichtung kann an einem vertikalen Abschnitt oder einem horizontalen Abschnitt des Rahmens 116 angeordnet sein. Die Fahrzeugtür 112 und der Rahmen 116 können in der Schließstellung der Fahrzeugtür 112 durch eine innere umlaufende Dichtlippe und eine äußere umlaufende Dichtlippe gegen Spritzwasser und zur Schalldämmung verschlossen sein. Die Bedienvorrichtung kann zwischen der (beispielsweise am Rahmen 116 befestigten) inneren Dichtlippe und der (beispielsweise an der Türe 112 befestigten) äußeren Dichtlippe am Rahmen 116 angeordnet sein.

In einer dritten Variante ist die Bedienvorrichtung innenliegend und/oder nach außen gerichtet im zweiten Bereich 122 innerhalb des Fahrerhauses 110 angeordnet. Beispielsweise ist die Bedienvorrichtung an einem Kabinenboden innerhalb des Fahrerhauses 110 und/oder hinter einem Fahrersitz befestigt.

Alternativ oder ergänzend zum ersten Bereich 120 und/oder dem zweiten Bereiche 122 kann die Bedienvorrichtung in einem dritter Bereich 124 unterhalb der Türöffnung 114 angeordnet sein. Vorzugsweise ist die Bedienvorrichtung im Bereich 124 der Trittstufen 118 angeordnet. Indem die untere Hälfte der Fahrzeugtür 112 in der Schließstellung der Fahrzeugtür 112 den Bereich 124 der Trittstufen 118 überdeckt, ist die Bedienvorrichtung vor einem unberechtigten Zugriff sowie vor Spritzwasser und Witterungseinflüssen geschützt.

Baustellenfahrzeuge, Lastkraftwagen und Sattelzugmaschinen sind Beispiele für das Nutzfahrzeug 100. Die Standfunktion kann eine auch im Fahrbetrieb einsetzbare Funktion umfassen, beispielsweise eine Warnblinkanlage oder eine höhenverstellbare Luftfederung. Eine in Figur 1 allgemein mit Bezugszeichen 130 gezeigte Standfunktion kann ferner eine für Transportgüter vorgesehene Funktion (beispielsweise einen Fahrmischer zum Betontransport) oder eine ausschließlich für einen Standbetrieb vorgesehene Funktion (beispielsweise Aufbauten wie Hebe- und Ladevorrichtungen, Nebenabtriebe für Hydraulikpumpen oder hydraulische Stützen) umfassen. Ebenso sind Kippbewegungen eines Laderaums oder einer Ladefläche sowie eine Außenbeleuchtung oder eine Beleuchtung innerhalb des Laderaums Beispiele für die Standfunktion.

Ferner kann im Fall einer Zugmaschine als Nutzfahrzeug oder eines Lastzugs die Standfunktion 130 im Sattelauflieger bzw. Anhänger implementiert sein. Steuersignale zur Steuerung der Standfunktion 130 mittels der Bedienvorrichtung können über Elektroanschlüsse am Nutzfahrzeug 100 an den Sattelauflieger bzw. Anhänger übertragen werden.

Die Standfunktionen 130 können einen Warnblinker ein- und ausschalten, einen Arbeitsscheinwerfer oder eine Laderaumbeleuchtung schalten, Rundum-Kennleuchten ein- und ausschalten, eine Ladebordwand öffnen und schließen, einen Batteriehauptschalter steuern, eine Komfortschließfunktion auslösen (bei der beispielsweise Fenster und Schiebedach schließen), einen Nebenabtrieb ein- und auskuppeln und/oder einen Beleuchtungstest durchführen. Alle oder ein Teil der Bedienelemente 212 können für Funktionen der Fahrzeugaufbauten frei konfigurierbar sein. Die Komfortschließfunktion kann redundant in einem Schlüssel des Nutzfahrzeugs 100 hinterlegt sein. Der Nebenabtrieb kann durch Steuerung einer Kupplung ein- und ausgeschaltet werden. Beim Beleuchtungstest können alle Lichtfunktionen des Nutzfahrzeugs 100 einen Prüfzyklus durchlaufen.

Die Standfunktionen können einzelne oder jede Unterkombination folgender Funktionen umfassen. Die Standfunktion kann die Betätigung einer Lichtfunktion umfassen, beispielsweise einen Lichttest, einen Warnblinker (an/aus), einen oder mehrere Arbeitsscheinwerfer (z. B. Rückraumleuchten auf Fahrerhausdach, Rückraumleuchte hinter Fahrerhaus, Rückraumleuchte an Fahrerhausverschluss und/oder Rückraumleuchte an Kotflügel rechts), Rundum-kennleuchten, einen Rückleuchtenschalter für Anhänger (externer Beleuchtungsschalter), Fahrleuchten zur Frontausleuchtung (an/aus) und/oder eine Laderaumbeleuchtung. Ferner können die Standfunktionen eine Coming-Home-Funktion und/oder eine Leaving-Home-Funktion umfassen.

Alternativ oder ergänzend können die Standfunktionen mechanische Komponenten betreffen, z. B. einen oder mehrere Nebenabtriebe (jeweils: an, aus und/oder Drehzahl), eine variable oder feste Zwischendrehzahlerhöhung bei Nutzung eines Nebenabtriebs, Freigabe der Ladebordwandsteuerung, den Fahrzeugmotor (an/aus), eine Luftfedersteuerung (Fahrniveau, Ladeniveau), Fensterschließung / Dachlukenschließung und/oder eine Zentralverriegelung. Beispielsweise kann eine Niveauregulierung der Luftfederung unterdrückt werden oder eine Absenkung der Luftfederung auf 20 mm bewirkt werden.

Die Standfunktionen können das Ein- und Ausschalten einer Standheizung umfassen. Alternativ oder ergänzend können die Bedienelemente einen elektrischen Batteriehauptschalter betätigen, ein Hupensignal bewirken und/oder vorgehalten sein für Aufbauerfunktionalitäten (beispielsweise mit entsprechender Taste und/oder frei belegbarer Taste). Dabei können die Bedienelemente für eine wechselnde Belegung universell verkabelt sein.

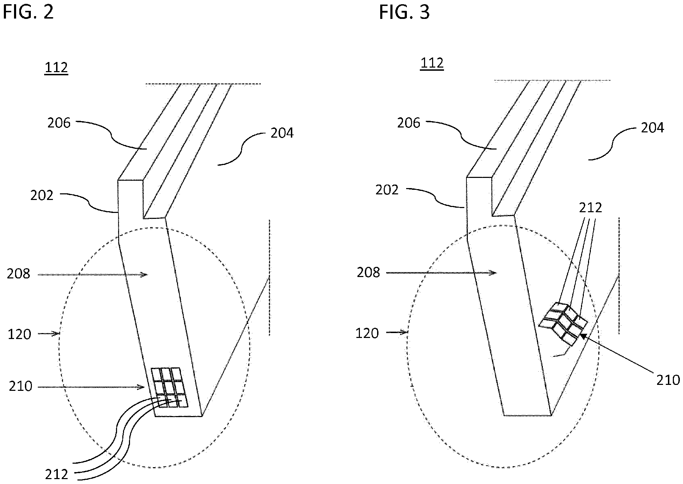

Figur 2 zeigt schematisch eine perspektivische Darstellung eines ersten Ausführungsbeispiels der Bedienvorrichtung an der Fahrzeugtür 112. Insbesondere kann die Bedienvorrichtung an der Fahrertür und/oder der Beifahrertür des Fahrerhauses 110 implementiert sein.

Die Fahrzeugtür 112 umfasst eine Außenseite 202 und eine Innenseite 204. Die Innenseite 204 kann ein Innenblech und eine Türverkleidung umfassen. Die Außenseite 202 und die Innenseite 204 sind an einem Türfalz 206 verbunden. Der Türfalz 206 kann (alternativ zur Darstellung in Figur 2) auch an einer Stirnseite 208 verlaufen, die der angeschlagenen Seite der Fahrzeugtür 112 gegenüberliegt.

Im in Figur 2 gezeigten Ausführungsbeispiel ist die Bedienvorrichtung 210 im ersten Bereich 120 an der Stirnseite 208 der Fahrzeugtür 112 angeordnet. Die Bedienvorrichtung 210 umfasst ein Feld mit Bedienelementen 212. Die Bedienelemente 212 können bündig mit der Stirnseite 208 sein oder um einen Bruchteil eines Türspalts aus der Seitenfläche 208 herausragen.

In der Schließstellung sind die Bedienelemente 212 durch den Rahmen 116 unzugänglich überdeckt. Zudem kann ein an der Stirnseite 208 verlaufender Türfalz 206 die Bedienvorrichtung 210 von außen unzugänglich und nicht einsichtig verschließen.

Zum Erreichen der Offenstellung der Fahrzeugtür 112 (in welcher die Bedienelemente 212 zugänglich sind) genügt eine Schwingbewegung, welche die Stirnseite 208 aus dem Rahmen 116 bewegt. Dadurch ist ein schneller Zugriff, auch bei beengtem Raum neben der Fahrzeugtür 112, auf die Bedienelemente 212 ermöglicht.

Figur 3 zeigt ein zweites nicht-erfindungsgemäßes Ausführungsbeispiel der an der Fahrzeugtür 112 angeordneten Bedienvorrichtung 210. Die Bedienvorrichtung 210 ist an der Innenseite 204 der Fahrzeugtür 112 angeordnet. Die Bedienelemente 212 ragen aus einer vertikalen Fläche der Innenseite 204 hervor. Die Bedienelemente 212 weisen horizontale oder gegenüber der Horizontalen (beispielsweise um 2° bis 45°) geneigte Bedienflächen auf. Die Bedienflächen können einem neben der Fahrzeugtür 112 stehenden Nutzer zugewandt sein. Dadurch kann eine komfortable Draufsicht auf die Bedienelemente 212 und/oder eine komfortable Druckbetätigung der Bedienelemente 212 ermöglicht sein.

In der Schließstellung der Fahrzeugtür 112 können die aus der Türinnenseite 204 hervorragenden Bedienelemente 212 in der Türöffnung 114 oder zwischen den Trittstufen 118 angeordnet sein.

Die Bedienelemente 212 können Schalter, beispielsweise Drucktaster oder Kippschalter, oder Drehsteller umfassen. Mechanische Schalter können auch mit Arbeitshandschuhen zuverlässig bedient werden.

Jedem Bedienelement 212 kann eine bestimmte Standfunktion zugeordnet sein. Die zugeordnete Standfunktion kann durch eine Beschriftung oder ein Piktogramm am jeweiligen Bedienelement 212 dargestellt sein. Die Darstellung kann aufgedruckt und/oder hintergrundbeleuchtet sein. Alternativ kann in jedem Bedienelement 212 eine Anzeige integriert sein, welche die zugeordnete Standfunktion (beispielsweise durch einen Schriftzug oder ein Piktogramm) darstellt.

Unabhängig von der Darstellung kann das Bedienelement 212 berührungsempfindlich sein, beispielsweise mittels eines kapazitiven Berührungssensors. Alternativ können die Bedienelemente 212 berührungslos betätigt werden, beispielsweise durch einen Annäherungs-und/oder Bewegungssensor. Eine Annäherung und/oder Bewegung einzelner Finger kann durch Aussendung von Mikrowellenstrahlung und Erfassung eines Echosignals der Mikrowellenstrahlung bestimmt werden. Bedienelemente 212 ohne mechanische Betätigung können durch eine geschlossen Oberfläche für Wasser und Staub unempfindlich sein und besonders leicht gereinigt werden.

Position und Funktionsweise der Bedienelemente 212 können in Abhängigkeit des vorgesehenen Standbetriebs des Nutzfahrzeugs gewählt sein. Beispielsweise kann die Technik zur Steuerung der Standfunktionen im Baustellenbetrieb, an Haltestellen einer Verteilerfahrt oder beim Be- und Entladen für eine Langstreckenfahrt eingesetzt werden.

Die Zuordnung (oder Belegung) der Bedienelemente 212 zu den jeweiligen Standfunktionen erfolgt nach den individuellen Anforderungen des Nutzfahrzeugs 100. Die Standfunktionen können den Bedienelementen 212 gemäß einer für das jeweilige Modell des Nutzfahrzeugs 100 vorgesehenen Festbelegung oder einer vom Nutzer (beispielsweise Käufer oder Fahrer) frei wählbaren Belegung zugeordnet werden. Beispielsweise kann der Fahrer zur Bestimmung der Zuordnung zwischen Bedienelement 212 und Standfunktion mittels eines Einstellungsmenüs (z. B. in einer Menüstruktur am Kombinationsinstrument des Nutzfahrzeuges 100) vor Verlassen des Fahrerhauses 110 die Zuordnung der Standfunktionen festlegen oder verändern, die nach Verlassen des Fahrerhauses 110 von außen erreichbar sein sollen.

Die an den Bedienelementen 212 hinterlegten Standfunktionen können redundant sein zu Funktionen, die vom Fahrerarbeitsplatz aus innerhalb des Fahrerhauses 110 zu bedienen sind. Alternativ oder ergänzend können die Standfunktionen ausschließlich von außen mittels der Bedienelemente 212 gesteuert werden, z. B. Funktionen der Fahrzeugaufbauten, die ein direkte Sichtfeld zu den Fahrzeugaufbauten erfordern.

Die Anordnung der Bedienvorrichtung 210 bietet dem Nutzer den Vorteil, nicht ins Fahrerhaus 110 einsteigen zu müssen, sondern die gewählten oder vorkonfigurierten Standfunktionen von außerhalb des Nutzfahrzeugs 100 steuern zu können. Zusätzliche Kosten für eine Sonderausstattung, beispielsweise eine Fernbedienung, oder Folgekosten durch den Ausfall einer defekten oder nicht einsatzbereiten Fernbedienung können vermieden werden.

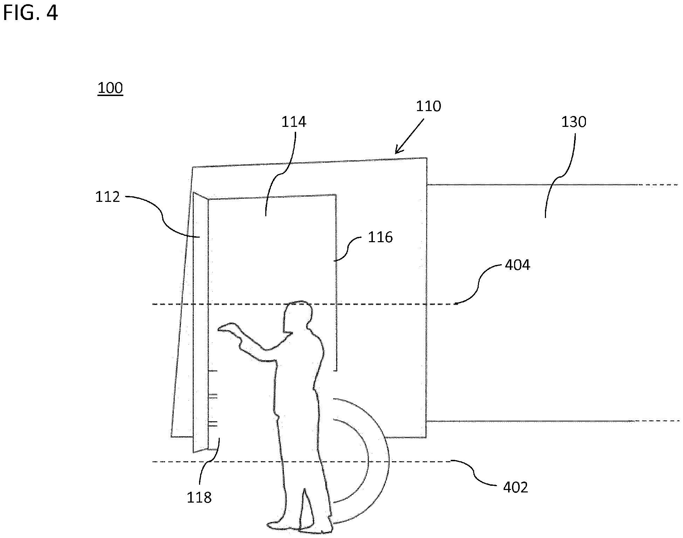

Figur 4 zeigt einen beispielhaften Höhenbereich zwischen einer Mindesthöhe 402 und einer Maximalhöhe 404, in dem die Bedienvorrichtung 210 angerordnet ist. Die Bedienvorrichtung 210 ist in einem Bereich des Fahrerhauses 110 angeordnet, in dem der Nutzer (beispielsweise der Fahrer) die Möglichkeit hat, die Bedienelemente 212 stehend von außen zu erreichen. Der Höhenbereich kann je nach Fahrzeugmodell variieren.

Beispielsweise kann die Mindesthöhe 402 durch eine Unterkante der Fahrzeugtür 112 bestimmt sein. Alternativ oder ergänzend kann die Mindesthöhe 402 (beispielsweise bei einer minimalen Höhenposition einer Luftfederung) 400 mm betragen. Die Maximalhöhe 404 kann durch eine Unterkante eines Fensters in der Fahrzeugtür 112 bestimmt sein. Alternativ oder ergänzend kann die Maximalhöhe 404 (beispielsweise bei einer maximalen Höhe der Luftfederung) 1600 mm betragen.

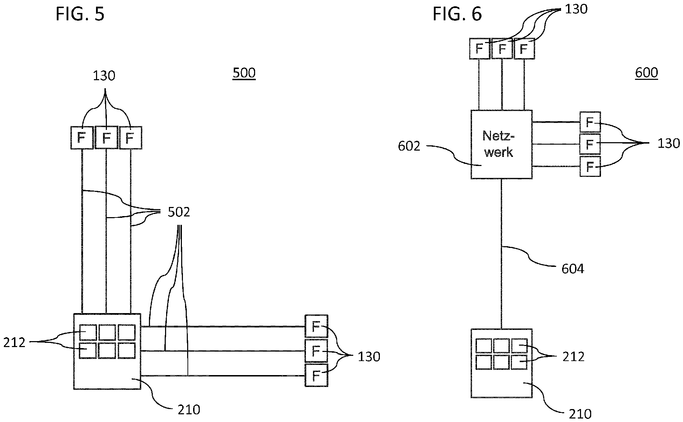

Figur 5 zeigt ein erstes Ausführungsbeispiel einer Anbindung der Bedienvorrichtung 210 zur Steuerung der Standfunktionen. Im in Figur 5 gezeigten Ausführungsbeispiel einer direkten oder festen Verdrahtung 500 ist jeweils eine Steuerleitung 502 zwischen der Bedienvorrichtung 210 (bzw. dem jeweiligen Bedienelement 212) und der zugeordneten Standfunktion 130 vorgesehen.

Beispielsweise sind die Taster als die Bedienelemente 212 mit Aufbaufunktionen 130 fest verdrahtet. Eine Konfiguration der Verdrahtung (d. h. eine Festlegung der Zuordnung zwischen Bedienelement 212 und Funktion 130) kann bei der Installation der Aufbaufunktion 130 bestimmt und/oder später werkstattseitig verändert werden.

Figur 6 zeigt ein zweites Ausführungsbeispiel einer Anbindung der Bedienvorrichtung 210. Bei der in Figur 6 gezeigten Netzwerkanbindung 600 werden die Standfunktionen 130 durch ein Netzwerk 602 gesteuert. Das Netzwerk 602 kann global für alle Fahrzeugfunktionen (beispielsweise einschließlich der Funktionen des Fahrbetriebs) oder ausschließlich für die Standfunktionen vorgesehen sein. Die Bedienvorrichtung 210 ist über einen Steuerbus 604 mit dem Netzwerk 602 verbunden. Der Steuerbus 604 kann ein serieller Bus sein. Jede Standfunktion 130 ist über einen entsprechenden Steuerbus 604 mit dem Netzwerk 602 verbunden. Beispielsweise ist jeder Knoten (d. h. die Bedienvorrichtung 210 und die Standfunktionen 130) jeweils über ein Leitungspaar mit dem Netzwerk 602 verbunden. Das Netzwerk kann (wie in Figur 6 am Bezugszeichen 602 gezeigt) einen zentralen Steuerknoten (oder eine Steuereinheit) umfassen, mit dem alle anderen Koten 130 und 210 jeweils verbunden sind. Alternativ oder ergänzend verbindet der Steuerbus 604 mehrere gleichberechtigte Knoten 130 und 210, beispielsweise in einem Controller Area Network (CAN)-Bussystem.

Die Netzwerkanbindung 600 ermöglicht eine flexible Einbindung der Bedienvorrichtung 210 in ein fahrzeugeigenes Netzwerk 602. Ferner eröffnet die Netzwerkanbindung 600 die Möglichkeit, die Zuordnung zwischen Bedienelementen 210 und Standfunktionen im Wege einer Netzwerkkonfiguration fahrzeugindividuell zu bestimmen.

Die Bedienelemente 212 der Bedienvorrichtung 210 können auch teilweise einzeln verdrahtet (beispielsweise gemäß der Anbindung 500) und teilweise über ein Netzwerk (beispielsweise gemäß der Anbindung 600) den Standfunktionen zugeordnet sein. Die Direktanbindung 500, die Netzwerkanbindung 600 oder eine kombinierte Anbindung ist in jedem der Ausführungsbeispiele implementierbar.

Die Bedienelemente 212 sind vorzugsweise in einem rechteckigen Schema angeordnet, beispielsweise als 2-auf-2-Matrix oder 3-auf-3-Matrix. Die Anzahl der Bedienelemente 212 kann je nach Modell des Nutzfahrzeugs 100 variieren.

Die Bedienelemente 212 der Bedienvorrichtung 210 können ganz oder teilweise mit den Standfunktionen 130 ab Werk oder ab Auslieferung belegt sein. Alternativ oder ergänzend kann die Belegung variabel durch den Nutzer oder eine Werkstatt zugeordnet werden. Hierzu sind am Fahrerarbeitsplatz eine Anzeige (z. B. das Kombinationsinstrument oder ein separater Bildschirm in der Mittelkonsole) und/oder Speichertasten angeordnet. Die Funktionen können mittels der Speichertasten einer weiteren Bedienvorrichtung im Innenbereich des Fahrerhauses 110 und/oder als Standfunktionen 130 der Bedienvorrichtung 210 im Außenbereich des Nutzfahrzeugs 110 zugeordnet werden.

Je nach Position der Bedienvorrichtung 210 am Fahrerhaus 110 sind die Bedienelemente 212 spritzwassergeschützt. Beispielsweise sind Bedienelemente 212 im Innenbereich des Fahrerhauses 110 mit einem einfachen oder ohne Spritzwasserschutz versehen. Eine Bedienvorrichtung 210 außerhalb einer Türdichtung ist mit einem zusätzlichen Spritzwasserschutz versehen.

Optional umfassen die Bedienelemente 212 eine Nachtbeleuchtung. Alternativ oder ergänzend ist ein Beleuchtungszustand repräsentativ für einen Schaltzustand des jeweiligen Bedienelements 212. Ferner kann die Beleuchtung von einer Außenhelligkeit, dem Schließzustand oder Offenzustand der Fahrzeugtür 112 und/oder einem Fahrzustand des Nutzfahrzeugs 100 abhängen. Beispielsweise wird die Beleuchtung der Bedienvorrichtung 210 durch das Schließen der Fahrzeugtür 112 deaktiviert, um störenden Lichteinfall im Fahrerhaus 110 bei einer Nachtfahrt zu vermeiden.

Sämtliche vorstehend beschriebenen Merkmale können jeweils auf der Fahrerseite und/oder der Beifahrerseite implementiert sein.

### Bezugszeichenliste

- 100: Nutzfahrzeug
- 110: Fahrerhaus
- 112: Fahrzeugtür
- 114: Türöffnung
- 116: Rahmen der Türöffnung
- 118: Trittstufe oder Trittstufen
- 120: Erster Bereich
- 122: Zweiter Bereich
- 124: Dritter Bereich
- 130: Standfunktion oder Standfunktionen
- 202: Außenseite der Fahrzeugtür
- 204: Innenseite der Fahrzeugtür
- 206: Türfalz
- 208: Stirnseite der Fahrzeugtür
- 210: Bedienvorrichtung
- 212: Bedienelemente
- 402: Mindesthöhe
- 404: Maximalhöhe
- 500: Direktanbindung
- 502: Steuerleitung
- 600: Netzwerkanbindung
- 602: Netzwerk
- 604: Steuerbus

## Patentansprüche

1. Fahrerhaus (110) für ein Nutzfahrzeug (100) mit steuerbaren Standfunktionen (130), umfassend:
eine Bedienvorrichtung (210) mit Bedienelementen (212) zur Steuerung der Standfunktionen (130) des Nutzfahrzeugs (100), wobei die Bedienelemente am Fahrerhaus (110) von außerhalb des Fahrerhauses zugänglich angeordnet sind,
**dadurch gekennzeichnet, dass**
das Fahrerhaus (110) ferner mindestens eine Fahrzeugtür (112) umfasst, die in einer Offenstellung die Bedienelemente (212) von außerhalb des Fahrerhauses (110) zugänglich freigibt.

2. Fahrerhaus nach Anspruch 1, wobei die Bedienelemente (212) in einer Schließstellung der Fahrzeugtür (112) von außerhalb des Fahrerhauses (110) unzugänglich überdeckt sind.

3. Fahrerhaus nach Anspruch 2, wobei die Bedienelemente (212) an der Fahrzeugtür (112) angeordnet sind.

4. Fahrerhaus nach Anspruch 2 oder 3, wobei die Bedienelemente (212) an einer Stirnseite (208) der Fahrzeugtür (112) angeordnet sind.

5. Fahrerhaus nach Anspruch 4, wobei die Bedienelemente (212) in der Schließstellung von einem Rahmen (116) einer Türöffnung (114) im Fahrerhaus für die Fahrzeugtür (112) überdeckt sind.

6. Fahrerhaus nach Anspruch 5, wobei am Rahmen eine umlaufende Dichtung angeordnet ist und die Bedienelemente (212) außerhalb der Dichtung des Rahmens angeordnet sind.

7. Fahrerhaus nach einem der Ansprüche 2 bis 6, wobei die Fahrzeugtür (112) eine umlaufende Dichtung aufweist und die Bedienelemente (212) innerhalb der Dichtung der Fahrzeugtür angeordnet sind.

8. Fahrerhaus nach einem der Ansprüche 2 - 7, ferner Trittstufen (118) umfassend, wobei die Fahrzeugtür (112) in der Schließstellung einen Bereich (124) der Trittstufen überdeckt und die Bedienelemente (212) im Bereich der Trittstufen angeordnet sind.

9. Fahrerhaus nach einem der Ansprüche 1 bis 8, wobei die Bedienvorrichtung (210) mit den Standfunktionen zur Steuerung fest verdrahtet ist.

10. Fahrerhaus nach einem der Ansprüche 1 bis 9, wobei die Bedienvorrichtung mit einem Steuerbus (604) des Nutzfahrzeugs (100) zur Steuerung der Standfunktionen (130) verbunden ist, und der Steuerbus (604) die Standfunktionen (130) den Bedienelementen (212) der Bedienvorrichtung (210) zuordnet gemäß einer Zuordnung, die an einer Benutzerschnittstelle innerhalb des Fahrerhauses abänderbar ist.

11. Fahrerhaus nach einem der Ansprüche 1 bis 10, wobei die Bedienelemente (212) der Bedienvorrichtung (210) in der Schließstellung der Fahrzeugtür (112) und/oder bei Fahrt des Nutzfahrzeugs (100) funktionslos sind.

12. Fahrerhaus nach einem der Ansprüche 1 bis 11 wobei die Bedienelemente (212) in Abhängigkeit einer Fahrzeuglichtschaltung beleuchtbar sind, und wobei die Beleuchtung der Bedienelemente unterbleibt in der Schließstellung der Fahrzeugtür (112) und/oder bei Fahrt des Nutzfahrzeugs (100).

13. Nutzfahrzeug, umfassend ein Fahrerhaus nach einem der vorhergehenden Ansprüche.

## Claims

1. A driver's cab (110) for a utility vehicle (100) with controllable stationary functions (130), comprising:
an operator control device (210) with operator control components (212) for controlling the stationary functions (130) of the utility vehicle (100), wherein the operator control elements are arranged on the driver's cab (110) in such a way that they are accessible from outside the driver's cab,
**characterized in that** the driver's cab (110) also comprises at least one vehicle door (112) which, in an open position, frees up access to the operator control elements (212) from outside the driver's cab (110) .

2. The driver's cab according to Claim 1, wherein, in a closed position of the vehicle door (112), the operator control elements (212) are covered in such a way that they are inaccessible from outside the driver's cab (110).

3. The driver's cab according to Claim 2, wherein the operator control elements (212) are arranged on the vehicle door (112).

4. The driver's cab according to Claim 2 or 3, wherein the operator control elements are arranged on an end face (208) of the vehicle door (112).

5. The driver's cab according to Claim 4, wherein, in the closed position, the operator control elements (212) are covered by a frame (116) of a door opening (114) in the driver's cab for the vehicle door (112) .

6. The driver's cab according to Claim 5, wherein a circumferential seal is arranged on the frame, and the operator control elements (212) are arranged outside the seal of the frame.

7. The driver's cab according to one of Claims 2 to 6, wherein the vehicle door (112) has a circumferential seal, and the operator control elements (212) are arranged inside the seal of the vehicle door.

8. Driver's cab according to one of Claims 2-7, also comprising steps (118), wherein, in the closed position, the vehicle door (112) covers the region (124) of the steps, and the operator control elements (212) are arranged in the region of the steps.

9. The driver's cab according to one of Claims 1 to 8, wherein the operator control device (210) is hardwired to the stationary functions for the purpose of control.

10. The driver's cab according to one of Claims 1 to 9, wherein the operator control device is connected to a control bus (604) of the utility vehicle (100) in order to control the stationary functions (130), and the control bus (604) assigns the stationary functions (130) to the operator control elements (212) of the operator control device (210) according to an assignment system which can be changed at a user interface within the driver's cab.

11. The driver's cab according to one of Claims 1 to 10, wherein, in the closed position of the vehicle door (112) and/or when the utility vehicle (100) is travelling, the operator control elements (212) of the operator control device (210) do not function.

12. The driver's cab according to one of Claims 1 to 11, wherein the operator control elements (212) can be illuminated in accordance with a vehicle light switch, and wherein the illumination of the operator control elements does not occur in the closed position of the vehicle door (112) and/or when the utility vehicle (100) is travelling.

13. A utility vehicle comprising a driver's cab according to one of the preceding claims.

## Revendications

1. Cabine de conducteur (110) pour un véhicule utilitaire (100) doté de fonctions d'immobilisation (130) pouvant être commandées, comprenant :
un dispositif d'actionnement (210) doté d'éléments d'actionnement (212) pour commander les fonctions d'immobilisation (130) du véhicule utilitaire (100), les éléments d'actionnement étant disposés sur la cabine de conducteur (110) en étant accessibles depuis l'extérieur de la cabine de conducteur,
**caractérisée en ce que** la cabine de conducteur (10) comprend en outre au moins une portière de véhicule (112) qui, dans une position ouverte, libère les éléments d'actionnement (212) de manière accessible depuis l'extérieur de la cabine de conducteur (110).

2. Cabine de conducteur selon la revendication 1, dans laquelle les éléments d'actionnement (212), dans une position de fermeture de la portière de véhicule (112), sont recouverts de manière inaccessible depuis l'extérieur de la cabine de conducteur (110).

3. Cabine de conducteur selon la revendication 2, dans laquelle les éléments d'actionnement (212) sont disposés sur la portière de véhicule (112).

4. Cabine de conducteur selon la revendication 2 ou 3, dans laquelle les éléments d'actionnement (212) sont disposés sur une face frontale (208) de la portière de véhicule (112).

5. Cabine de conducteur selon la revendication 4, dans laquelle les éléments d'actionnement (212), dans la position de fermeture, sont recouverts d'un encadrement (116) d'une ouverture de portière (114) dans la cabine de conducteur pour la portière de véhicule (112).

6. Cabine de conducteur selon la revendication 5, dans laquelle un joint périphérique est disposé sur l'encadrement, et les éléments d'actionnement (212) sont disposés en dehors du joint de l'encadrement.

7. Cabine de conducteur selon l'une quelconque des revendications 2 à 6, dans laquelle la portière de véhicule (112) présente un joint périphérique, et les éléments d'actionnement (212) sont disposés à l'intérieur du joint de la portière de véhicule.

8. Cabine de conducteur selon l'une quelconque des revendications 2 à 7, comprenant en outre des marchepieds (118), dans laquelle la portière de véhicule (112), dans la position de fermeture, recouvre une zone (124) des marchepieds, et les éléments d'actionnement (212) sont disposés au niveau des marchepieds.

9. Cabine de conducteur selon l'une quelconque des revendications 1 à 8, dans laquelle le dispositif d'actionnement (210) doté de fonctions d'immobilisation est câblé pour la commande.

10. Cabine de conducteur selon l'une quelconque des revendications 1 à 9, dans laquelle le dispositif d'actionnement est relié à un bus de commande (604) du véhicule utilitaire (100) pour commander les fonctions d'immobilisation (130), et le bus de commande (604) attribue les fonctions d'immobilisation (130) aux éléments d'actionnement (212) du dispositif d'actionnement (210) selon une attribution qui peut être modifiée au niveau d'une interface utilisateur à l'intérieur de la cabine de conducteur.

11. Cabine de conducteur selon l'une quelconque des revendications 1 à 10, dans laquelle les éléments d'actionnement (212) du dispositif d'actionnement (210) sont sans fonction dans la position de fermeture de la portière de véhicule (112) et/ou pendant la marche du véhicule utilitaire (100).

12. Cabine de conducteur selon l'une quelconque des revendications 1 à 11, dans laquelle les éléments d'actionnement (212) peuvent être éclairés en fonction d'un circuit d'éclairage de véhicule, et dans laquelle l'éclairage des éléments d'actionnement est omis dans la position de fermeture de la portière de véhicule (112) et/ou pendant la marche du véhicule utilitaire (100) .

13. Véhicule utilitaire, comprenant une cabine de conducteur selon l'une quelconque des revendications précédentes.
